# EUROPEAN PATENT APPLICATION

(11) **EP 2 366 443 A2**
(43) Date of publication of application: **21.09.2011**
(21) Application number: 09829239.4
(22) Date of filing: 28.09.2009
(51) Int. Cl.: B01D 35/00

(54) **BALLAST WATER TREATMENT SYSTEM**

(30) Priority: 28.11.2008 KR 20080119604
(71) Applicant: Panasia Co., Ltd., Busan 464-050 (KR)
(72) Inventor: LEE, Soo-Tae, Busan 618-270 (KR); PYO, Tae-Sung, Busan 604-020 (KR); KIM, Hyun-O, Jinhae-si Gyeongsangnam-do 645-530 (KR); CHEON, Sang-Gyu, Gimhae-si Gyeongsangnam-do 621-901 (KR)
(74) Representative: Vierheilig, Achim
(86) International application number: PCT/KR2009/005538
(87) International publication number: WO 2010/062032

(57) **Abstract**

Provided is a system for treatment of ballast water used in a ship. More particularly, the ballast water treatment system of the present invention comprises: a filtering unit which filters the ballast water taken into a ship; an ultraviolet treatment unit for sterilizing the ballast water filtered by the filtering unit by using ultraviolet rays; and a control unit for controlling operations of the filtering unit and the ultraviolet treatment unit. The filtering unit includes a body having an inlet and an outlet, a filter for filtering the ballast water flowing along the inside of the body, an automatic washing unit for washing off foreign substances from the filter, and a pressure sensor for measuring pressures at the inlet and the outlet. The ultraviolet treatment unit includes a body having an inlet and an outlet, an ultraviolet lamp for irradiating ultraviolet rays to the ballast water flowing along the inside of the body, a sleeve washing unit for removing foreign substances from the sleeve surrounding the ultraviolet lamp, an ultraviolet intensity meter for measuring the intensity of ultraviolet rays irradiated from the ultraviolet lamp, and a temperature sensor for measuring the temperature of the inside of the body. The present invention enables effective treatment of ballast water with less cost, prevents harmful substances or secondary contamination, prevents the inside of a ballast water tank from being polluted, and enables automatic washing of the apparatus even during operation.

## Description

### Technical Field

The present invention relates, in general, to a system for treating ballast water used in a ship and, more particularly, to a ballast water treatment system including a filtering unit which filters ballast water taken into a ship using a filter, an ultraviolet treatment unit which sterilizes the ballast water filtered by the filtering unit using ultraviolet rays, and a control unit which controls operations of the filtering unit and the ultraviolet treatment unit. The filtering unit includes a body having an inlet and an outlet, a filter for filtering the ballast water flowing along the inside of the body, an automatic washing unit for washing foreign substances off of the filter, and a pressure sensor for measuring pressure at the inlet and the outlet. The ultraviolet treatment unit includes a body having an inlet and an outlet, an ultraviolet lamp for irradiating ultraviolet rays to the ballast water flowing along the inside of the body, a sleeve washing unit for removing foreign substances from a sleeve surrounding the ultraviolet lamp, an ultraviolet intensity meter for measuring the intensity of ultraviolet rays irradiated from the ultraviolet lamp, and a temperature sensor for measuring the temperature of the inside of the body. The present invention enables effective treatment of ballast water at lower cost, prevents harmful substances from entering and secondary contamination, prevents the inside of a ballast tank from becoming polluted, and enables automatic washing of the system even while in operation.

### Background Art

Ballast water is seawater that is put into a ballast tank of a ship in order for the ship to maintain its balance when sailing without goods.

The increasing volume of internal trade has led to an increase in the proportion of marine transportation, so that the number and sizes of the ships have also been rapidly increasing. Thus, the volume of ballast water used in ships has also increased considerably. As the volume of the ballast water used in ships has increased, damage done to the endemic marine ecosystem resulting from it being attacked by exotic marine organism species is also increasing. In order to address the international environmental contamination problem, the Internal Maritime Organization (IMO) completed the International Treaty Concerning Control and Management of Ballast Water and Sediment of Ships in 2004, which became effective in 2009.

As the conventional method of treating ballast water, a marine treatment method of exchanging ballast water on the sea and a land treatment method were used but they are ineffective. Thus, a method of installing ballast water treatment equipment in a ship has been widely used. The ballast water treatment equipment mainly uses filtering, heat treatment, chemical treatment, electrolysis, ozone treatment or ultraviolet ray radiation, etc.

However, the heat treatment is problematic in that it is difficult to treat microorganisms or inorganic sources of contamination which are resistant to heat. The chemical treatment is problematic because secondary contamination may occur after ballast water has been treated. Further, the electrolysis or ozone treatment is problematic in that an explosion may be caused by a short circuit and it is inefficient to manage. In particular, the filtering is problematic in that sediment must be removed from a filter and the operation of treating ballast water must be stopped when the sediment is removed. Further, the ultraviolet ray radiation is problematic in that its efficiency is low because of foreign substances adhering to the surface of a sleeve which surrounds an ultraviolet lamp. Further, it is difficult to completely treat ballast water by only one of the above methods. If all of the above methods are applied, treatment costs are increased, so that it is inefficient.

### Disclosure

### Technical Problem

Accordingly, the present invention has been made keeping in mind the above problems occurring in the prior art, and an object of the present invention is to provide a ballast water treatment system, in which both a method of physically filtering ballast water using a filter and a method of sterilizing ballast water using ultraviolet rays are used to treat ballast water, thus preventing secondary contamination due to byproducts, preventing the contamination of a ballast tank, enabling efficient maintenance, and making it easy to control.

Another object of the present invention is to provide a ballast water treatment system, in which a bypass duct is further provided between a filtering unit and an ultraviolet treatment unit, thus allowing ballast water to be treated while passing through only either of the filtering unit or the ultraviolet treatment unit, as necessary.

A further object of the present invention is to provide a ballast water treatment system, in which a filtering unit or an ultraviolet treatment unit may be automatically washed, thus always maintaining uniform performance, and enabling efficient maintenance.

Yet another object of the present invention is to provide a ballast water treatment system, which allows a filtering unit or an ultraviolet treatment unit to be automatically washed without halting the treatment of ballast water, thus enhancing treatment efficiency, and thereby being efficient in terms of treatment time or cost.

Still another object of the present invention is to provide a ballast water treatment system, which is constructed so that an automatic washing unit of a filtering unit may simultaneously perform vertical movement and rotary movement, thus improving the ability of washing a filter.

### Technical Solution

In order to accomplish the above objects, the present invention provides a ballast water treatment system constructed as will be described below.

According to an embodiment of the present invention, a ballast water treatment system includes a filtering unit for filtering ballast water taken in a ship using a filter, an ultraviolet treatment unit for sterilizing the ballast water filtered by the filtering unit, using ultraviolet rays, and a control unit for controlling operation of the filtering unit and the ultraviolet treatment unit.

According to another embodiment of the present invention, the ballast water treatment system may further include a bypass duct provided between the filtering unit and the ultraviolet treatment unit so that the ballast water flows through only either of the filtering unit or the ultraviolet treatment unit to be treated as necessary.

According to yet another embodiment of the present invention, the ballast water treatment system may further include a display unit connected to the control unit to display an operating state of the ballast water treatment system.

According to still another embodiment of the present invention, the filtering unit may include a body having an inlet and an outlet that permit inflow and outflow of the ballast water, the filter filtering the ballast water in the body, an automatic washing unit washing off foreign substances adhering to the filter, and a pressure sensor measuring pressure at the inlet and the outlet.

According to yet another embodiment of the present invention, the automatic washing unit may include a driving unit driving the automatic washing unit in response to a signal of the control unit, a suction unit movably connected to the driving unit and sucking foreign substances adhering to the filter, and an exhaust unit discharging the foreign substances sucked by the suction unit.

According to still another embodiment of the present invention, the suction unit may include a suction rod sucking foreign substances adhering to the filter, a core connected to the suction rod to move the sucked foreign substances, and a driving shaft connected between the core and the driving unit and moving the core by operation of the driving unit, and the exhaust unit may include a flushing chamber storing foreign substances discharged through an exhaust hole formed in an end of the core, an exhaust pipe serving as a passage through which the foreign substances of the flushing chamber are discharged, and an exhaust valve provided in a predetermined portion of the exhaust pipe, whereby the foreign substances adhering to the filter can be automatically sucked and discharged using a difference in pressure as the exhaust valve is open and closed.

According to yet another embodiment of the present invention, the driving shaft may be in the form of a threaded part, and the suction rod may be radially connected to the core, so that the driving shaft performs vertical movement and rotary movement as the driving unit is operated, thus more efficiently sucking the foreign substances from the filter.

According to still another embodiment of the present invention, the ultraviolet treatment unit may include a body having an inlet and an outlet that permits inflow and outflow of the ballast water, an ultraviolet lamp radiating ultraviolet rays to the ballast water which flows in the body, a sleeve washing unit removing foreign substances from a sleeve which surrounds the ultraviolet lamp, an ultraviolet intensity meter measuring an intensity of ultraviolet rays which are emitted from the ultraviolet lamp, and a temperature sensor measuring a temperature in the body.

According to yet another embodiment of the present invention, the sleeve washing unit may include a wiper attached to an outer circumference of the sleeve, a driving shaft connected to the wiper, and a driving motor connected to the driving shaft to actuate the driving shaft.

### Advantageous Effects

The construction, assembly, and use of the present invention can achieve the following effects.

The present invention provides a ballast water treatment system, in which both a method of physically filtering ballast water using a filter and a method of sterilizing ballast water using ultraviolet rays are used to treat ballast water, thus preventing secondary contamination due to byproducts, preventing the contamination of a ballast tank, enabling efficient maintenance, and making it easy to control.

The present invention provides a ballast water treatment system, in which a bypass duct is further provided between a filtering unit and an ultraviolet treatment unit, thus allowing ballast water to be treated while passing through only either of the filtering unit or the ultraviolet treatment unit, as necessary.

The present invention provides a ballast water treatment system, in which a filtering unit or an ultraviolet treatment unit may be automatically washed, thus always maintaining uniform performance, and enabling efficient maintenance.

The present invention provides a ballast water treatment system, which allows a filtering unit or an ultraviolet treatment unit to be automatically washed without halting the treatment of ballast water, thus enhancing treatment efficiency, and thereby being efficient in terms of treatment time or cost.

The present invention provides a ballast water treatment system, which is constructed so that an automatic washing unit of a filtering unit may simultaneously perform vertical movement and rotary movement, thus improving the ability of washing a filter.

### Description of Drawings

FIG. 1 is a block diagram showing a ballast water treatment system, according to an embodiment of the present invention;
FIG. 2 is a schematic view showing the coupling between a filtering unit and an ultraviolet treatment unit of the ballast water treatment system, according to the embodiment of the present invention;
FIG. 3 is a sectional view showing the filtering unit of the ballast water treatment system, according to the embodiment of the present invention;
FIG. 4 is a partially cutaway perspective view showing an ultraviolet treatment unit of the ballast water treatment system, according to the embodiment of the present invention;
FIG. 5 is a perspective view showing a sleeve washing unit of the ultraviolet treatment unit;
FIG. 6 is a photograph showing experimental equipment on a barge;
FIG. 7 is an experimental setup diagram showing microorganism treating ability of the ballast water treatment system; and

### *Description of reference characters of important parts

1: intake pump 2: filtering unit
3: ultraviolet treatment unit 4: control unit
5: display unit 6: ballast tank 7: bypass duct
21: body 22: filter 23: automatic washing unit
24: pressure sensor
211: inlet 212: outlet
231: driving unit 232: suction unit 233: exhaust unit
2321: suction rod 2322: core 2323: driving shaft
2322a: exhaust hole 2323a: contact means
2323b: limit switch
2331: flushing chamber 2332: exhaust pipe
2333: exhaust valve
31: body 32: ultraviolet lamp 33: sleeve washing unit
34: ultraviolet intensity meter 35: temperature sensor
311: inlet 312: outlet
321: sleeve
331: wiper 332: driving shaft 333: driving motor

### Best Mode

Hereinafter, a ballast water treatment system according to the preferred embodiment of the present invention will be described in detail with reference to the accompanying drawings.

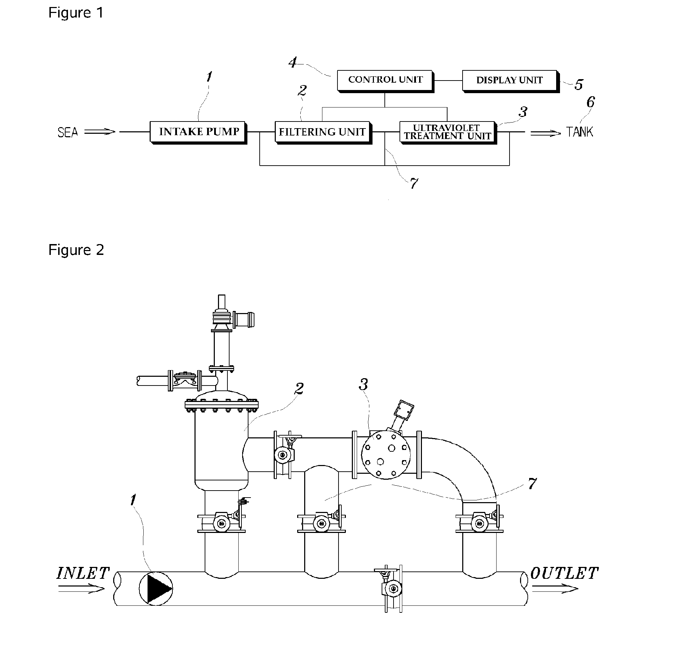

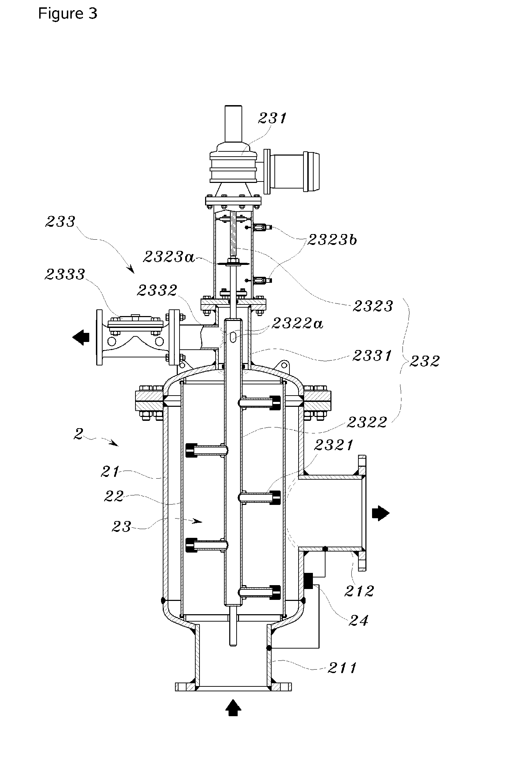

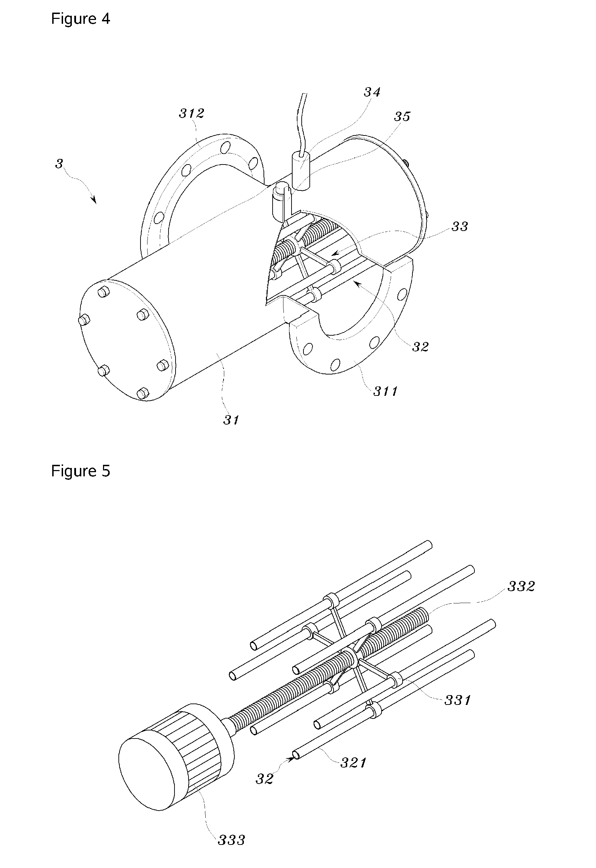

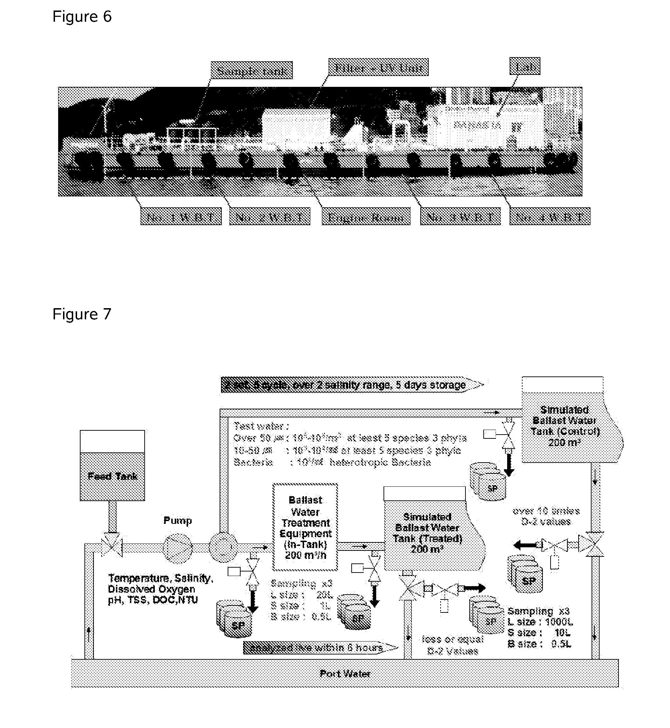

FIG. 1 is a block diagram showing a ballast water treatment system, according to an embodiment of the present invention, FIG. 2 is a schematic view showing the coupling between a filtering unit and an ultraviolet treatment unit of the ballast water treatment system, according to the embodiment of the present invention, FIG. 3 is a sectional view showing the filtering unit of the ballast water treatment system, according to the embodiment of the present invention, FIG. 4 is a partially cutaway perspective view showing an ultraviolet treatment unit of the ballast water treatment system, according to the embodiment of the present invention, FIG. 5 is a perspective view showing a sleeve washing unit of the ultraviolet treatment unit, FIG. 6 is a photograph showing experimental equipment on a barge, FIG. 7 is an experimental setup diagram showing microorganism treating ability of the ballast water treatment system, and FIG. 8 is a table showing the experimental results of the microorganism treating ability.

Referring to FIGS. 1 and 2, the ballast water treatment system according to an embodiment of the present invention includes a filtering unit 2 which filters ballast water taken from an intake pump 1 of a ship using a filter, an ultraviolet treatment unit 3 which sterilizes the ballast water filtered by the filtering unit 2 using ultraviolet rays, and a control unit 4 which controls the operation of the filtering unit 2 and the ultraviolet treatment unit 3.

The function of the filtering unit 2 is to filter the ballast water, taken from the intake pump 1 of the ship, using the filter. Referring to FIG. 3, the filtering unit 2 includes a body 21, the filter 22, an automatic washing unit 23, and a pressure sensor 24. The body 21 has an inlet 211 and an outlet 212 to permit the inflow and outflow of the ballast water. The filter 22 filters the ballast water which flows through the body 21. The function of the automatic washing unit 23 is to wash foreign substances adhering to the filter 22. The pressure sensor 24 measures the pressure at the inlet 211 and the outlet 212.

The body 21 defines the body of the filtering unit 2, and may preferably have the shape of a cylinder that has a space therein. The body includes the inlet 211 into which the ballast water taken into the ship is introduced, and the outlet 212 through which filtered ballast water is discharged. According to the present invention, as will be described below, the filtering unit performs a filtering operation using the filter 22 which surrounds the interior of the body 21. Thus, it is preferable that the inlet 211 be located at a lower position of the body 21 and the outlet 212 be located above the inlet 211 so that ballast water flowing into the lower portion of the body is filtered while filling the interior of the body 21.

The filter 22 functions to filter the ballast water introduced into the body 21 through the inlet 211, and may preferably have a cylindrical shape along the inner circumference of the body 21 to surround the interior of the body 21. Thus, in order to discharge the ballast water, which flows through the inlet 211 into the body 21, through the outlet 212, the ballast water must necessarily pass through the filter 22. Filtering the ballast water using the filter 22 removes organisms and particles over 50µm. In the case of continuously performing the filtering operation, foreign substances accumulate in the inner surface of the filter 22, so that the filtering function is deteriorated and thus the operation of removing foreign substances is performed by the automatic washing unit 23 that will be described below in detail.

The automatic washing unit 23 serves to automatically remove foreign substances from the filter 22 under the control of the control unit 4 using a difference in pressure between the inside and the outside of the filter 22. The automatic washing unit 23 includes a driving unit 231, a suction unit 232, and an exhaust unit 233. The driving unit 231 drives the automatic washing unit 23 in response to a signal of the control unit 4. The suction unit 232 is connected to the driving unit 231 to be moved by the driving unit, and sucks foreign substances adhering to the filter 22. The exhaust unit 233 functions to discharge foreign substances from the suction unit 232.

The driving unit 231 serves to provide power for operating the automatic washing unit 23, may use a general motor, and is automatically operated under the control of the control unit 4.

The suction unit 232 is connected to the driving unit 231 to be operated thereby, thus sucking foreign substances from the filter 22. The suction unit includes suction rods 2321, a core 2322, and a driving shaft 2323. Each suction rod 2321 functions to suck foreign substances adhering to the filter 22. The core 2322 is connected to the suction rod 2321 to move the sucked foreign substances. The driving shaft 2323 is connected between the core 2322 and the driving unit 231 to move the core 2322 in conjunction with the operation of the driving unit 231.

The suction rod 2321 is the part that sucks foreign substances from the inner surface of the filter 22, and may have the shape of a rod or bar which has a through hole therein. One end of the suction rod is in close contact with the inner surface of the filter 22 and thus sucks foreign substances from the inner surface of the filter 22. Preferably, a through hole on the end may be of a smaller diameter to increase suction force. The other end is connected to the core 2322 to move the sucked foreign substances to the core 2322. Further, a plurality of suction rods 2321 may be radially attached to the outer circumference of the core 2322 in such a way that they have different heights. Such a construction allows foreign substances to be more easily sucked from the filter 22 when the core 2322 moves up and down while rotating, as will be described below. The principle wherein each suction rod 2321 sucks foreign substances from the filter 22 uses the flow of ballast water caused by a difference in pressure between high pressure in the filter 22 and low pressure in the suction rod 2321 or the core 2322, which will be described below in detail.

The core 2322 is connected to the suction rods 2321 to move the sucked foreign substances. The core may have the shape of a rod or bar which is hollow therein. The suction rods 2321 are radially attached to the outer circumference of the core, so that the foreign substances sucked through the suction rods 2321 may move through the internal space of the core 2322. An exhaust hole 2322a may be formed in one end of the core 2322 so that foreign substances passing through the internal space are discharged to a flushing chamber 2331 of the exhaust unit 233, which will be described below. Further, one end of the core 2322 is connected to the driving shaft 2323, so that the core 2322 may perform rotary movement as well as vertical movement, as the driving shaft 2323 moves. The principle wherein foreign substances may move in the core 2322 also uses the flow of ballast water caused by a difference in pressure between high pressure in the filter 22 and low pressure in each suction rod 2321 or the core 2322, which will be described below in detail.

The driving shaft 2323 is the part that is connected between the core 2322 and the driving unit 231, and moves up and down and rotates the core 2322 in conjunction with the operation of the driving unit 231. The outer circumference of one end of the driving shaft 2323 connected with the driving unit 231 may be formed to have a threaded part. This enables the vertical movement and the rotation of the driving shaft as the driving unit 231 is operated, thus allowing foreign substances to be more efficiently sucked from the filter 22. Further, a contact means 2323a may be coupled to an end of the driving shaft 2323. The contact means 2323a is a part that comes into contact with limit switches 2323b which limit the vertical moving distance of the driving shaft 2323, and may comprise a disc-shaped rubber member or metal member. When the contact means 2323a is in contact with each limit switch 2323b, the movement direction of the driving shaft 2323 changes under the control of the control unit 4, so that the driving shaft 2323 moves up and down between the limit switches 2323b.

The exhaust unit 233 functions to discharge foreign substances from the suction unit 232. The exhaust unit includes the flushing chamber 2331, an exhaust pipe 2332, and an exhaust valve 2333. The flushing chamber 2331 stores foreign substances which are discharged through the exhaust hole 2322a formed in one end of the core 2322. The exhaust pipe 2322 is the passage through which the foreign substances of the flushing chamber 2331 are discharged. The exhaust valve 2333 is provided at a position in the exhaust pipe 2332.

The flushing chamber 2331 is the part where foreign substances discharged through the exhaust hole 2322a of the core 2322 accumulate. Preferably, the size and shape of the flushing chamber are set in consideration of the distance the core 2322 moves up and down so that the flushing chamber may store foreign substances discharged from the exhaust hole 2322a of the core 2322 under any circumstances.

The exhaust pipe 2332 is the passage through which the foreign substances of the flushing chamber 2331 are discharged, and may have the shape of a pipe which is connected to a side of the flushing chamber 2331.

The exhaust valve 2333 is connected to a portion of the exhaust pipe 2332 and provides a suction force that sucks and discharges foreign substances from the filter 22. The exhaust valve is controlled by the control unit 4. That is, when the exhaust valve 2333 is open, the interiors of the exhaust pipe 2332, the flushing chamber 2331, the core 2322 and the suction rods 2321 are at atmospheric pressure, that is, are at a pressure lower than the high pressure in the filter 22. The ballast water present in the filter 22 is sucked into each suction rod 2321 which is at low pressure. At this time, foreign substances adhering to the filter 22 are also sucked up. Meanwhile, when the exhaust valve 2333 is closed, the suction of ballast water and foreign substances stops. The overall operating principle will be described below.

The pressure sensor 24 is constructed to measure the internal and external pressures of the filter 22, and may comprise generally used pressure measuring sensors. If a difference between the internal and external pressures of the filter 22 measured by the pressure sensor 24 goes outside a predetermined range, the automatic washing unit 23 starts the operation of removing foreign substances from the filter 22 under the control of the control unit 4.

The operating principle of the filtering unit 2 including the above components will be described in detail. First, ballast water flowing through the inlet 211 into the body 21 is filtered through the filter 22 and then is discharged through the outlet 212. At this time, if the foreign substances filtered by the filter 22 adhere to the inner surface of the filter 22, the internal pressure of the filter 22 measured by the pressure sensor 24 rises. Further, if the internal pressure exceeds a predetermined range, the automatic washing unit 23 starts operating under the control of the control unit 4. If the control unit 4 operates the driving unit 231, the driving shaft 2323, the core 2322 and the suction rods 2321 perform vertical movement and rotary movement. Further, if the control unit 4 performs control such that the exhaust valve 2333 is open, the internal pressure of the suction rods 2321 becomes lower than the internal pressure of the filter 22, so that the ballast water and the foreign substances in the filter 22 are sucked through the suction rods 2321, and thus are discharged through the core 2322, the flushing chamber 2331 and the exhaust pipe 2332. Further, if the internal pressure of the filter 22 drops below a predetermined range, the automatic washing unit 23 stops operating. One of the important characteristics of the ballast water treatment system according to the present invention is that the filtering operation continues using the filter 22 of the filtering unit 2 even when the automatic washing unit 23 is being operated.

The ultraviolet treatment unit 3 functions to sterilize ballast water filtered by the filtering unit 2, using ultraviolet rays. Referring to FIGS. 4 and 5, the ultraviolet treatment unit 3 includes a body 31, an ultraviolet lamp 32, a sleeve washing unit 33, an ultraviolet intensity meter 34, and a temperature sensor 35. The body 31 has an inlet 311 and an outlet 312 that permits the inflow and outflow of ballast water. The ultraviolet lamp 32 radiates ultraviolet rays onto the ballast water flowing in the body 31. The sleeve washing unit 33 removes foreign substances from a sleeve 321 surrounding the ultraviolet lamp 32. The ultraviolet intensity meter 34 measures the intensity of the ultraviolet rays emitted from the ultraviolet lamp 32. The temperature sensor 35 functions to measure the internal temperature of the body 31. As necessary, a plurality of ultraviolet treatment units 3 may be continuously installed in series, and may be installed at a position separate from the filtering unit 2.

The body 31 defines the body of the ultraviolet treatment unit 3, and may preferably have the shape of a cylinder which has a space therein. The body 31 includes the inlet 311 into which ballast water flows and the outlet 312 through which sterilized ballast water is discharged. Preferably, the inlet 311 and the outlet 312 may be formed in a side surface of the cylindrical body 31 in order to increase the effect of sterilizing ballast water through the ultraviolet lamp 32.

The ultraviolet lamp 32 emits ultraviolet rays and radiates them into the ballast water flowing into the body 31. The ultraviolet lamp 32, shaped as a rod or bar, is positioned in the body 31. Preferably, a plurality of ultraviolet lamps 32 may be radially placed at regular intervals in the cylindrical body 31 in such a way as to be parallel to the body 31 in an axial direction thereof. Thereby, the ballast water flowing through the inlet 311 and the outlet 312 may pass by perpendicular to the ultraviolet lamps 32. If foreign substances adhere to a surface of the sleeve 321 surrounding the ultraviolet lamp 32, the intensity of the emitted ultraviolet rays is reduced. Thus, the surface of the sleeve 321 is washed by the sleeve washing unit 33.

The sleeve washing unit 33 functions to remove foreign substances from the surface of the sleeve 321. The sleeve washing unit 33 includes a wiper 331 which is attached to the outer circumference of the sleeve 321, a driving shaft 332 which is connected to the wiper 331, and a driving motor 333 which is connected to the driving shaft 332 to actuate the driving shaft 332.

The wiper 331 functions to remove foreign substances from the outer circumference of the sleeve 321, and may preferably have an annular shape which surrounds the entire outer circumference of the sleeve 321. The wiper may be made of synthetic resin or synthetic rubber having heat resistance. If there is a plurality of sleeves 321, a plurality of wipers 331 is required. In this case, each of the wipers 331 may be connected to the driving shaft 332.

The driving shaft 332 is connected to the wiper 331 and moves the wiper 331 so that it may remove foreign substances from the outer circumference of the sleeve 321. Preferably, the driving shaft may be provided in the central portion of the body 31 in such a way as to be parallel to the body 31 in the axial direction thereof, and the outer circumference of the driving shaft 332 may have a threaded part. The driving shaft 332 is connected at an end thereof to the driving motor 333.

The driving motor 333 is connected to one end of the driving shaft 332 to provide the power that operates the driving shaft 332 and the wiper 331. The driving motor 333 may comprise a general motor.

The ultraviolet intensity meter 34 functions to measure the intensity of the ultraviolet rays emitted from the ultraviolet lamp 32, and may be provided on the outer circumference of the body 31 in such a way as to pass through the body 31. Since the ultraviolet intensity meter 34 is connected to the control unit 4, the control unit 4 operates the sleeve washing unit 33 when the intensity of the measured ultraviolet rays is lower than a predetermined range. The operating principle will be described below in detail.

The temperature sensor 35 functions to measure the internal temperature of the body 31 of the ultraviolet treatment unit 3, and may be provided on the outer circumference of the body 31 or provided in the body. Since the temperature sensor is connected to the control unit 4, the control unit 4 stops the operation of the ultraviolet treatment unit 3 if the internal temperature of the body 31 is above a predetermined range.

The operating principle of the ultraviolet treatment unit 3 including the above components will be described below in detail. First, ballast water which flows through the inlet 311 into the body 31 is sterilized by the ultraviolet rays which are radiated from the ultraviolet lamp 32, prior to being discharged through the outlet 312. At this time, if foreign substances adhere to the surface of the sleeve 321 surrounding the ultraviolet lamp 32, the intensity of the ultraviolet rays emitted from the ultraviolet lamp 32 is reduced. When the intensity of the ultraviolet rays measured by the ultraviolet intensity meter 34 is reduced to below a predetermined range, the sleeve washing unit 33 is operated under the control of the control unit 4. While the wiper 331 is moved along the driving shaft 332 by the operation of the driving motor 333, foreign substances are removed from the surface of the sleeve 321. Further, when the internal temperature of the body 31 measured by the temperature sensor 35 is above a predetermined range, the control unit 4 stops the operation of the ultraviolet treatment unit 3.

The control unit 4 functions to control the overall operation of the filtering unit 2 and the ultraviolet treatment unit 3. As described above, the control unit is connected to the automatic washing unit 23, the pressure sensor 24, the sleeve washing unit 33, the ultraviolet intensity meter 34, and the temperature sensor 35, and transceives signals from and to the above components, thus controlling the overall operation. The control unit 4 may further function to store data and transmit a warning message.

Further, according to another embodiment of the present invention, a display unit 5 may be further provided. The display unit is connected to the control unit 4 to display the operating state of the ballast water treatment system. The display unit 5 displays the state of the ballast water treated by the filtering unit 2 and the ultraviolet treatment unit 3 as well as the states of the automatic washing unit 23, the pressure sensor 24, the sleeve washing unit 33, the ultraviolet intensity meter 34, and the temperature sensor 35 which are operated under the control of the control unit 4, thus allowing the persons concerned to easily check the operating state.

The ballast water treatment system according to an embodiment of the present invention uses both a method of physically filtering ballast water using the filter and a method of sterilizing ballast water using the ultraviolet rays so as to treat the ballast water, thus preventing secondary contamination due to byproducts, preventing the contamination of the ballast tank, and allowing the filtering unit or the ultraviolet treatment unit to be automatically washed, therefore always keeping performance uniform and enabling efficient maintenance. Further, the ballast water treatment system allows the filtering unit or the ultraviolet treatment unit to be automatically washed without halting the treatment of ballast water, thus enhancing treatment efficiency, therefore being efficient in terms of treatment time or cost. The automatic washing unit of the filtering unit is constructed to simultaneously perform the vertical movement and the rotary movement, thus improving the ability of washing the filter.

As shown in FIG. 2, the ballast water treatment system according to another embodiment of the present invention may further include a bypass duct 7 between the filtering unit 2 and the ultraviolet treatment unit 3 so that the ballast water passes through only either the filtering unit 2 or the ultraviolet treatment unit 3 to be treated, as necessary.

The bypass duct 7 allows ballast water to flow between the filtering unit 2 and the ultraviolet treatment unit 3. Generally, ballast water is treated while passing sequentially through the filtering unit 2 and the ultraviolet treatment unit 3. However, if the bypass duct 7 is installed, the ballast water may pass through only either of the filtering unit 2 or the ultraviolet treatment unit 3 to be treated. Particularly in the case of discharging the ballast water stored in the ballast tank 6 to the sea, the ballast water need not pass through the filtering unit 2, so that the ballast water may be discharged after passing through only the ultraviolet treatment unit 3. Thus, it is effective in terms of treatment time and cost.

Hereinafter, the treatment effect obtained when ballast water is treated by the ballast water treatment system according to the present invention will be described based on comparative experiment data.

### [Experiment] Experiment on microorganism treating ability of ballast water treatment system

1. Object: Verification of microorganism treating ability of ballast water treatment system according to the present invention
2. Subject: 5 or more species of microorganisms and bacteria that belong to 3 different phyla
3. Method: As shown in FIG. 6, an experiment is conducted using experimental equipment on a barge, and the method is shown in FIG. 7.

In a study group, right after ballast water containing 5 or more species of microorganisms and bacteria that belong to 3 different phyla has been treated by the ballast water treatment system according to the present invention, and after 5 days have passed since storing the treated ballast water in the ballast tank, the ballast water is collected and the quantity of remaining microorganisms is measured.

Meanwhile, in a control group, right before ballast water containing 5 or more species of microorganisms and bacteria that belong to 3 different phyla is stored in the ballast tank without undergoing any additional treatment, and after 5 days have passed since storing the ballast water in the ballast tank, the water is collected and the quantity of remaining microorganisms is measured.
4. Result: The experimental results are shown in Table 1.

The control group yields the following results. That is, as for ① microorganisms having size over 50µm, they are reduced from an initial value, 250,000 Ind/m3 to 223,000 Ind/m3, and after 5 days have passed, they are reduced to 126,000 Ind/m3. As a result, the residual rate of the microorganisms exceeds 50%. As for (2) microorganisms of 10 to 50µm, they are reduced from an initial value, 5,000 Ind/m3, to 4,300 Ind/m3, and after 5 days have passed, they are reduced to 3,600 Ind/m3· As a result, the residual rate of the microorganisms exceeds 70%. Further, as for ③ bacteria, they are reduced from an initial value, 2,700 _{Cfu/100ml} to 1, 800 _{Cfu/100ml}, and after 5 days have passed, they are present in the remaining quantity of 235 _{Cfu/100ml}.

In contrast, the study group yields the following results. That is, as for ① microorganisms having size over 50µm, the microorganisms having the initial value of 250,000 Ind/m3 are reduced to 800 Ind/m3 after treatment, and are reduced to 0 Ind/m3 after 5 days have passed. As such, the residual rate of the microorganisms is 0%, which perfectly satisfies the IMO requirements requiring 10 Ind/m3 or less. As for ② microorganisms of 10 to 50µm, the microorganisms having the initial value of 5,000 Ind/m3 are reduced to 240 Ind/m3 after treatment, and are reduced to 0 Ind/m3 after 5 days have passed. As such, the residual rate of the microorganisms is 0%, which perfectly satisfies the IMO requirements requiring 10 Ind/m3 or less. Further, as for ③ bacteria, the bacteria having the initial value of 2,700 _{Cfu/100ml} are reduced to 26 _{Cfu/100ml} after treatment, and are present in the remaining quantity of 13 _{Cfu/100ml} after 5 days have passed. Consequently, it can be seen that the remaining quantity of the bacteria perfectly satisfies the IMO requirements requiring 250 _{Cfu/100ml} or less.

**[Table 1]**

| Organism Type | Unit | Initial | Control Day 0 | Control Day 5 | Treated Day 0 | Treated Day 5 | IMO Req |
|---|---|---|---|---|---|---|---|
| Organisms >50um | Ind/m3 | 250.000 | 223.000 | 126.000 | 800 | 0 | >10 |
| Organisms 10-50um | Ind/ml | 5.000 | 4.300 | 3.600 | 240 | 0 | >10 |
| E-coli bacteria | Cfu/ 100ml | 2.700 | 1.800 | 235 | 26 | 13 | >250 |

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A ballast water treatment system, comprising:
a filtering unit for filtering ballast water taken in a ship using a filter;
an ultraviolet treatment unit for sterilizing the ballast water filtered by the filtering unit, using ultraviolet rays; and
a control unit for controlling operation of the filtering unit and the ultraviolet treatment unit.

2. The ballast water treatment system according to claim 1, further comprising:
a bypass duct provided between the filtering unit and the ultraviolet treatment unit so that the ballast water flows through only either of the filtering unit or the ultraviolet treatment unit to be treated as necessary.

3. The ballast water treatment system according to claim 1, further comprising:
a display unit connected to the control unit to display an operating state of the ballast water treatment system.

4. The ballast water treatment system according to any one of claims 1 to 3, wherein the filtering unit comprises:
a body having an inlet and an outlet that permit inflow and outflow of the ballast water;
the filter filtering the ballast water in the body;
an automatic washing unit washing off foreign substances adhering to the filter; and
a pressure sensor measuring pressure at the inlet and the outlet.

5. The ballast water treatment system according to claim 4, wherein the automatic washing unit comprises:
a driving unit driving the automatic washing unit in response to a signal of the control unit;
a suction unit movably connected to the driving unit and sucking foreign substances adhering to the filter; and
an exhaust unit discharging the foreign substances sucked by the suction unit.

6. The ballast water treatment system according to claim 5, wherein the suction unit comprises a suction rod sucking foreign substances adhering to the filter, a core connected to the suction rod to move the sucked foreign substances, and a driving shaft connected between the core and the driving unit and moving the core by operation of the driving unit, and
the exhaust unit comprises a flushing chamber storing foreign substances discharged through an exhaust hole formed in an end of the core, an exhaust pipe serving as a passage through which the foreign substances of the flushing chamber are discharged, and an exhaust valve provided in a predetermined portion of the exhaust pipe,
whereby the foreign substances adhering to the filter can be automatically sucked and discharged using a difference in pressure as the exhaust valve is open and closed.

7. The ballast water treatment system according to claim 6, wherein the driving shaft is in a form of a threaded part, and the suction rod is radially connected to the core, so that the driving shaft performs vertical movement and rotary movement as the driving unit is operated, thus more efficiently sucking the foreign substances from the filter.

8. The ballast water treatment system according to any one of claims 1 to 3, wherein the ultraviolet treatment unit comprises:
a body having an inlet and an outlet that permits inflow and outflow of the ballast water;
an ultraviolet lamp radiating ultraviolet rays to the ballast water which flows in the body;
a sleeve washing unit removing foreign substances from a sleeve which surrounds the ultraviolet lamp;
an ultraviolet intensity meter measuring an intensity of ultraviolet rays which are emitted from the ultraviolet lamp; and
a temperature sensor measuring a temperature in the body.

9. The ballast water treatment system according to claim 8, wherein the sleeve washing unit comprises:
a wiper attached to an outer circumference of the sleeve;
a driving shaft connected to the wiper; and
a driving motor connected to the driving shaft to actuate the driving shaft.
